# EUROPEAN PATENT APPLICATION

(11) **EP 4 546 516 A1**
(43) Date of publication of application: **30.04.2025**
(21) Application number: 23842223.2
(22) Date of filing: 14.07.2023
(51) Int. Cl.: H01M 50/147, H01M 50/547, H01M 50/531

(54) **BATTERY CELL, BATTERY, AND ELECTRICAL APPARATUS**

(30) Priority: 19.07.2022 CN 202221856857 U
(71) Applicant: Contemporary Amperex Technology (Hong Kong) Limited, Hong Kong (HK)
(72) Inventor: LIN, Denghua, Ningde, Fujian 352100 (CN); CHEN, Long, Ningde, Fujian 352100 (CN); CHEN, Xinxiang, Ningde, Fujian 352100 (CN); ZHENG, Yulian, Ningde, Fujian 352100 (CN); JIN, Haizu, Ningde, Fujian 352100 (CN); WANG, Peng, Ningde, Fujian 352100 (CN); HUANG, Shoujun, Ningde, Fujian 352100 (CN)
(74) Representative: Herrmann, Uwe
(86) International application number: PCT/CN2023/107447
(87) International publication number: WO 2024/017160

(57) **Abstract**

Some embodiments of this application provide a battery cell, a battery, and an electrical device. The battery cell includes a housing, an end cap, and an electrode terminal. An opening is created on the housing. The end cap is configured to fit and cover the opening. The electrode terminal is disposed on the housing. The end cap is a largest-area wall of the battery cell. By making the end cap be the largest-area wall of the battery cell, this application increases the area of the opening, facilitates a structure in the battery cell to enter the housing, increases the assembling speed during assembling, and in turn, improves production efficiency of the battery cell.

## Description

### CROSS-REFERENCE TO RELATED APPLICATIONS

This application claims priority to Chinese Patent Application No. 202221856857.X, filed on July 19, 2022 and entitled "BATTERY CELL, BATTERY, AND ELECTRICAL DEVICE", which is incorporated herein by reference in its entirety.

### TECHNICAL FIELD

This application relates to the technical field of batteries, and in particular, to a battery cell, a battery, and an electrical device.

### BACKGROUND

With the increasing aggravation of natural resource depletion and environmental damage, systems capable of storing energy and efficiently utilizing the stored energy are drawing higher interest of participants in various fields. Battery cells can combine with each other to form a system that utilizes new renewable energy.

In the technical field of battery devices, the production efficiency of battery cells is relatively low.

### SUMMARY

Some embodiments of this application provide a battery cell, a battery, and an electrical device to facilitate assembling and formation of the battery cell and improve production efficiency of the battery cell.

According to a first aspect of this application, a battery cell is provided. The battery cell includes a housing, an end cap, and an electrode terminal. An opening is created on the housing. The end cap is configured to fit and cover the opening. The electrode terminal is disposed on the housing. The end cap is a largest-area wall of the battery cell.

With the above structure, by making the end cap be the largest-area wall of the battery cell, this application increases the area of the opening, and facilitates a structure in the battery cell to enter the housing. In addition, the electrode terminal is disposed on the housing, thereby increasing the assembling speed during assembling, and in turn, improving production efficiency of the battery cell.

In some optional embodiments of this application, the battery cell further includes an electrode assembly. The electrode assembly is disposed in the housing. The electrode assembly includes a body portion and a tab extending from the body portion. An arrangement direction of the tab and the body portion is perpendicular to a thickness direction of the end cap.

With the above structure, by making the arrangement direction of the tab and the body portion be perpendicular to the thickness direction of the end cap, this application reduces the space occupied by the tab and increases the energy density.

In some optional embodiments of this application, the housing includes a first wall and a second wall intersecting each other. An area of the second wall is larger than an area of the first wall and smaller than an area of the end cap. The electrode terminal is disposed on the first wall. An end face, from which the tab extends, of the body portion is oriented toward the second wall.

With the above structure, the infiltration area of the electrode assembly can be increased maximally, thereby improving the infiltration effect.

In some optional embodiments of this application, the battery cell further includes a connecting component. The connecting component is configured to connect the electrode terminal and the tab.

With the above structure, by disposing a connecting component, it is convenient to connect the tab to the electrode terminal.

In some optional embodiments of this application, the connecting component includes a first connecting portion and a second connecting portion. The first connecting portion is configured to be connected to the electrode terminal. The second connecting portion is configured to be connected to the tab.

With the above structure, by disposing the first connecting portion and the second connecting portion, a part connected to the electrode terminal and the tab on the connecting component is made relatively independent, thereby making it convenient to dispose a structure on the connecting component to connect the electrode terminal and the tab.

In some optional embodiments of this application, the connecting component is L-shaped.

With the above structure, by making the connecting component be L-shaped, it is convenient to dispose the connecting component at a corner between the first wall and the second wall, thereby fully utilizing the remaining space in the housing and increasing the energy density of the battery cell.

In some optional embodiments of this application, along the thickness direction of the end cap, the housing includes two openings arranged opposite to each other. The battery cell includes two end caps. The two end caps are disposed at the two openings correspondingly.

With the above structure, by creating two openings, the operating space available for assembling on the housing is further increased, thereby improving the assembling efficiency.

In some optional embodiments of this application, along a thickness direction of the second wall, a dimension of the body portion of the electrode assembly is H1, and a dimension of the housing is H2, satisfying: H1/H2 ≥ 0.8.

With the above structure, by constraining the H1/H2 ratio, the body portion maximally fills the internal space of the battery cell, thereby reducing the space occupied by other components (such as a connecting component) of the battery cell, and improving the space utilization and energy density of the battery cell.

In some optional embodiments of this application, the electrode assembly is a jelly-roll electrode assembly. A dimension of the electrode assembly along a first direction is L, satisfying: 300 mm ≤ L ≤ 800 mm. The first direction is perpendicular to the thickness direction of the end cap and a thickness direction of the second wall.

With the above structure, the dimension of the electrode assembly along the first direction is constrained, thereby alleviating the problem that L is overly small and results in a relatively low energy density of the battery cell, and the problem that L is overly large and increases the difficulty of processing the electrode assembly and reduces the production efficiency of the electrode assembly.

In some optional embodiments of this application, along the thickness direction of the end cap, a dimension of the electrode assembly is D, satisfying: 10 mm ≤ D ≤ 80 mm.

With the above structure, the dimension of the electrode assembly along the thickness direction is constrained, thereby alleviating the problem that D is overly small and results in a relatively low energy density of the battery cell, and the problem that D is overly large and increases the difficulty of processing the electrode assembly and reduces the production efficiency of the electrode assembly.

According to a second aspect of this application, a battery is provided. The battery includes the battery cell.

According to a third aspect of this application, an electrical device is provided. The electrical device includes the battery cell configured to provide electrical energy.

In contrast to the related art, in the battery cell, battery, and electrical device disclosed in some embodiments of this application, by making the end cap be the largest-area wall of the battery cell, this application increases the area of the opening, facilitates a structure in the battery cell to enter the housing, increases the assembling speed during assembling, and in turn, improves production efficiency of the battery cell.

### BRIEF DESCRIPTION OF DRAWINGS

To describe the technical solutions of the embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.
FIG. 1 is a schematic structural diagram of a vehicle according to some embodiments of this application;
FIG. 2 is a schematic structural diagram of a battery according to some embodiments of this application;
FIG. 3 is a schematic structural diagram of a battery cell according to some embodiments of this application;
FIG. 4 is a schematic structural diagram of a battery cell according to some other embodiments of this application;
FIG. 5 is a schematic structural side view of a battery cell according to some embodiments of this application;
FIG. 6 is a cross-sectional schematic view of sectioning along an A-A line shown in FIG. 5;
FIG. 7 is a close-up view of a first wall shown in FIG. 6;
FIG. 8 is a close-up view of an electrode terminal shown in FIG. 6; and
FIG. 9 is a schematic structural diagram of an electrode assembly according to some embodiments of this application.

### List of reference numerals:

1000. vehicle; 100. battery; 200. controller; 300. motor; 110. box; 111. first box portion; 112. second box portion; 10. battery cell;
1. housing; 11. opening; 12. first wall; 13. second wall; 2. end cap; 3. electrode terminal; 4. electrode assembly; 41. body portion; 42. tab; 43. end face; 5. connecting component; 51. first connecting portion; 52. second connecting portion.

### DETAILED DESCRIPTION OF EMBODIMENTS

To make the objectives, technical solutions, and advantages of the embodiments of this application clearer, the following gives a clear description of the technical solutions in some embodiments of this application with reference to the drawings in some embodiments of this application. Evidently, the described embodiments are merely a part rather than all of the embodiments of this application. All other embodiments derived by a person of ordinary skill in the art based on the embodiments of this application without making any creative efforts still fall within the protection scope of this application.

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The term "include", "contain" and any variations thereof used in the specification, claims, and brief description of drawings of this application are intended as non-exclusive inclusion.

In the description of some embodiments of this application, the technical terms "first" and "second" are merely intended to distinguish between different items but not intended to indicate or imply relative importance or implicitly specify the number of the indicated technical features, specific order, or order of precedence.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of embodiments of this application, the term "a plurality of" means two or more (including two). Similarly, "a plurality of groups" means two or more groups (including two groups), and "a plurality of pieces" means two or more pieces (including two pieces).

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of this application, unless otherwise expressly specified and defined, the technical terms such as "mount", "concatenate", "connect", and "fix" are generic in a broad sense, for example, mean a fixed connection, a detachable connection, or a one-piece configuration; or mean a mechanical connection or an electrical connection; or mean a direct connection or an indirect connection implemented through an intermediary; or mean internal communication between two components or interaction between two components. A person of ordinary skill in the art can understand the specific meanings of the terms in some embodiments of this application according to specific situations.

In the development of battery technology, not only various design factors need to be considered, but also the battery production process, such as production efficiency and production safety, needs to be considered. The production efficiency in battery production has become one of the serious obstacles to the further development of batteries.

The inventor hereof finds that the battery cell includes a housing configured to form an accommodation space. An opening is typically created on the housing. Through the opening, an internal structure of the battery cell can be put into the accommodation space. However, in order to increase the energy density of the battery cell, the internal structure of the battery cell is relatively compact. It is relatively difficult to put the internal structure into the housing in an assembling process, thereby severely impairing the production efficiency of the battery cell.

To alleviate the technical problem of low production efficiency of the battery cell, through research, the applicant hereof finds that, by adjusting the position of the opening on the housing and increasing the passage area of the opening, it is convenient to put the internal structure of the battery cell into the housing, thereby improving the assembling speed and improving the production efficiency of the battery cell.

Based on the above considerations, the applicant hereby designs a battery cell, a battery, and an electrical device through in-depth research.

An embodiment of this application provides an electrical device powered by a battery. The electrical device may be, but is not limited to, a mobile phone, a tablet, a laptop computer, an electric toy, an electric tool, an electric power cart, an electric vehicle, a ship, a spacecraft, or the like. The electric toy may include stationary or mobile electric toys, such as a game console, an electric car toy, an electric ship toy, an electric airplane toy, and the like. The spacecraft may include an airplane, a rocket, a space shuttle, a spaceship, and the like.

In some embodiments, the battery may be an energy storage device. Energy storage devices include an energy storage container, an energy storage cabinet, and the like.

For ease of description in the following embodiments, a vehicle 1000 is used as an example of the electrical device according to an embodiment of this application.

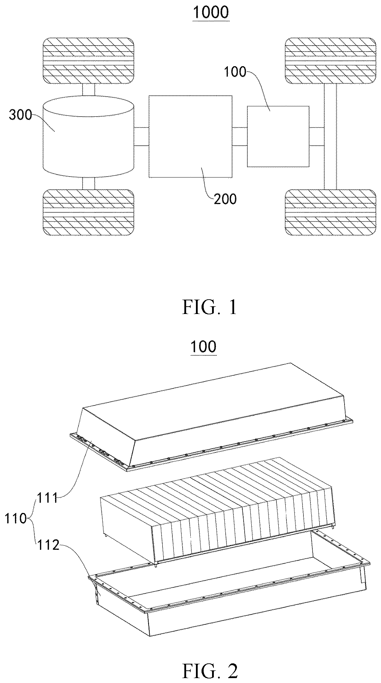

As shown in FIG. 1, FIG. 1 is a schematic structural diagram of a vehicle 1000 according to some embodiments of this application. The vehicle 1000 may be an oil-fueled vehicle, a natural gas vehicle, or a new energy vehicle. The new energy vehicle may be a battery electric vehicle, a hybrid electric vehicle, a range-extended electric vehicle, or the like. A battery 100 is disposed inside the vehicle 1000. The battery 100 may be disposed at the bottom, front, or rear of the vehicle 1000. The battery 100 may be configured to supply power to the vehicle 1000. For example, the battery 100 may serve as an operating power supply of the vehicle 1000. The vehicle 1000 may further include a controller 200 and a motor 300. The controller 200 is configured to control the battery 100 to supply power to the motor 300, for example, to meet electrical energy requirements in starting, navigating, or running the vehicle 1000.

In some embodiments of this application, the battery 100 serves not only as an operating power supply of the vehicle 1000, but may also serve as a driving power supply of the vehicle 1000 to provide driving power for the vehicle 1000 in place of or partly in place of fuel oil or natural gas.

The battery referred to herein means a unitary physical module that includes one or more battery cells to provide a higher voltage and a higher capacity. For example, the battery mentioned in this application may include a battery module, a battery pack, or the like.

As shown in FIG. 2, FIG. 2 is a schematic structural diagram of a battery 100 according to some embodiments of this application. In some embodiments of this application, the battery 100 includes a box 110. The box 110 may include a first box portion 111 and a second box portion 112 connected to each other. A plurality of battery cells are connected to each other in parallel, series, or series-and-parallel pattern and are then placed in a space formed by connecting the first box portion 111 and the second box portion 112. The shapes of the first box portion 111 and the second box portion 112 may be depend on the shape formed by combining a plurality of battery cells. The battery cell may be in the shape of a flat body, a cuboid, or other shapes. The shape of the battery cell is not limited herein. The packaging form of the battery cell includes, but is not limited to, a cylindrical battery cell, a prismatic battery cell, a pouch-type battery cell, or the like, and is not particularly limited herein. In addition, the battery 100 may further include other structures. For example, the battery may further include a busbar component. The busbar component is configured to implement electrical connection between a plurality of battery cells, details of which are omitted here.

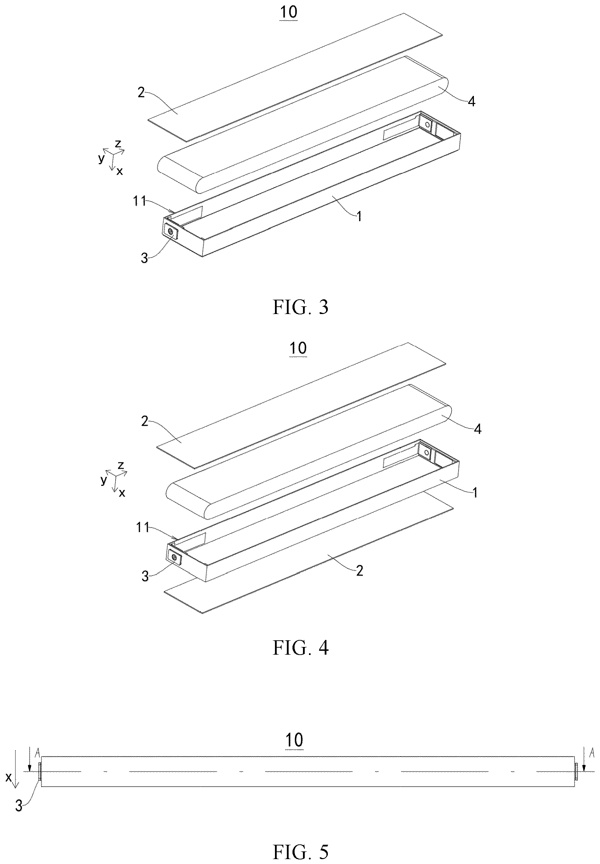

FIG. 3 is a schematic structural diagram of a battery cell according to some embodiments of this application, and FIG. 4 is a schematic structural diagram of a battery cell according to some other embodiments of this application. As shown in FIG. 3 and FIG. 4, in some optional embodiments of this application, a battery cell 10 is provided. The battery cell includes a housing 1, an end cap 2, and an electrode terminal 3. An opening 11 is created on the housing 1. The end cap 2 is configured to fit and cover the opening 11. The electrode terminal 3 is disposed on the housing 1. The end cap 2 is a largest-area wall of the battery cell.

The housing 1 is a component configured to form an accommodation space of the battery cell. The formed accommodation space may be configured to accommodate an internal structure of the battery cell. As an example, the shape of the housing 1 may depend on the specific shape of the electrode assembly 4. The housing 1 may be made of a variety of materials such as copper, iron, aluminum, stainless steel, aluminum alloy, or plastic, without being particularly limited herein.

The electrode terminal 3 is configured to be electrically connected to the outside, so as to output or input electrical energy from or to the battery cell 10. As an example, one end of the electrode terminal 3 is disposed in the housing 1, and is connected to the internal structure of the battery cell 10. The other end of the electrode terminal is disposed outside the housing 1.

The end cap 2 is configured to fit and cover the opening 11 of the housing 1 to form a hermetic connection, and in turn, form a hermetic space configured to accommodate the internal structure of the battery cell.

By making the end cap 2 be the largest-area wall of the battery cell 10, this application increases the area of the opening 11, facilitates a structure in the battery cell 10 to enter the housing 1, increases the assembling speed during assembling, and in turn, improves production efficiency of the battery cell 10.

Referring to FIG. 3 and FIG. 4, optionally, the housing 1 may be a hollowed structure with the opening 11 created at one side, or a hollowed structure with the opening 11 created at two opposite ends. As an example, taking a prismatic battery as an example, the opening 11 of the housing 1 is created on one wall or two largest-area walls of the prismatic battery, and the end cap 2 covers the opening 11. As an example, the wall means a wall-shaped structure configured to wrap around to form a space, for example, six walls of a prismatic cell. As an example, when two openings 11 are created, two end caps 2 may be disposed. One end cap 2 fits and covers one corresponding opening 11 of the housing 1 to form a hermetic connection, and in turn, form a hermetic space configured to accommodate the internal structure of the battery cell 10.

Referring to FIG. 3 and FIG. 4, optionally, the area of the end cap 2 is larger than the area of any one of the remaining surfaces of the battery cell. As an example, taking a prismatic battery as an example, the end cap 2 may fully cover the largest-area wall of the prismatic battery, or partially cover the largest-area wall of the prismatic battery.

Optionally, the electrode terminal 3 may include a positive electrode terminal and a negative electrode terminal. The positive electrode terminal and the negative electrode terminal are configured to be electrically connected to a positive tab and a negative tab of the electrode assembly, respectively.

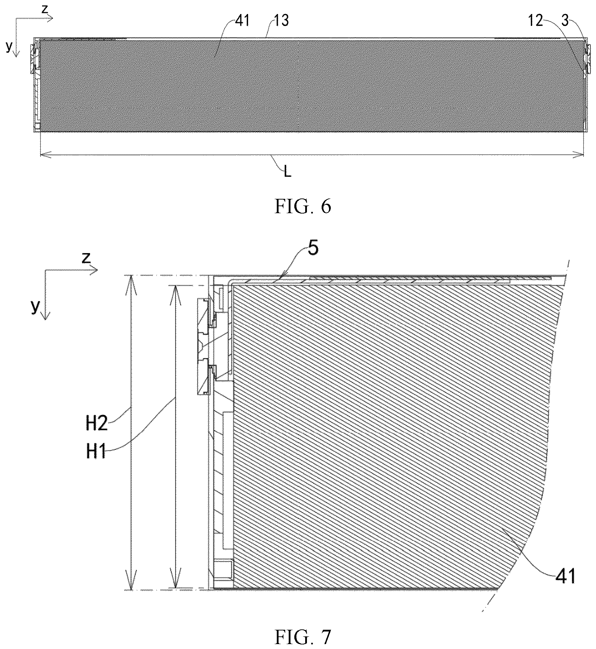

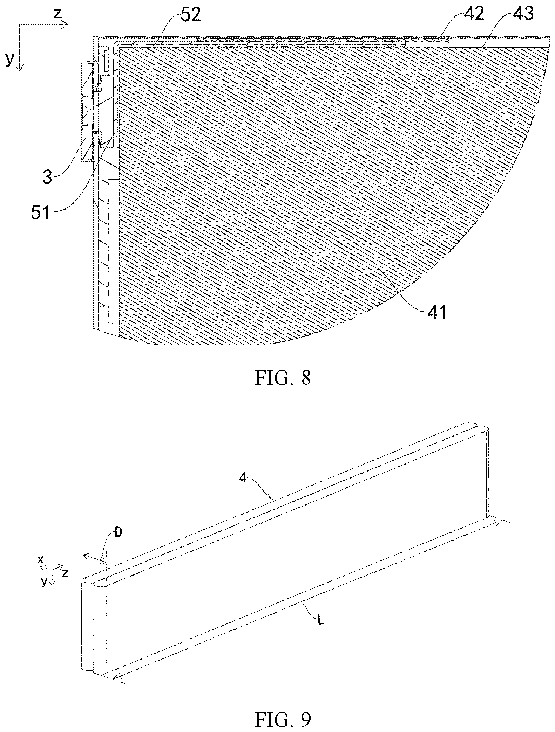

FIG. 5 is a schematic structural side view of a battery cell according to some embodiments of this application. FIG. 6 is a cross-sectional schematic view of sectioning along an A-A line shown in FIG. 5. FIG. 7 is a close-up view of a first wall 12 shown in FIG. 6. FIG. 8 is a close-up view of an electrode terminal 3 shown in FIG. 6. As shown in FIG. 3 and FIG. 5 to FIG. 8, in some optional embodiments of this application, the battery cell further includes an electrode assembly 4. The electrode assembly 4 is disposed in the housing 1. The electrode assembly 4 includes a body portion 41 and a tab 42 extending from the body portion 41. An arrangement direction (y-axis direction in the drawing) of the tab 42 and the body portion 41 is perpendicular to a thickness direction (x-axis direction in drawing) of the end cap 2.

The electrode assembly 4 is a component in which electrochemical reactions occur in the battery cell. As an example, the electrode assembly 4 is typically formed of a positive electrode plate and a negative electrode plate that are wound or stacked together. Generally, a separator is disposed between the positive electrode plate and the negative electrode plate. The parts, coated with an active material, of the positive electrode plate and the negative electrode plate, constitute a body portion 41 of the electrode assembly 4. The part, coated with no active material, of the positive electrode plate and the negative electrode plate separately, constitutes a tab 42. In a charging or discharging process of the battery cell, the positive active material and the negative active material react with an electrolyte solution in the battery cell. The tab 42 is electrically connected to the electrode terminal 3 to form a current circuit.

By making the arrangement direction of the tab 42 and the body portion 41 be perpendicular to the thickness direction of the end cap 2, the end face from which the tab 42 is led out is caused not to correspond to the largest surface (that is, the end cap 2) on the battery cell, thereby significantly reducing the waste of space for leading out the tab 42, and increasing the energy density.

For example, taking a prismatic battery as an example, the battery includes two large walls with the largest areas, two intermediate walls with intermediate areas, and two small walls with the smallest areas. The end face 43, from which the tab 42 extends, may be one of an end face 43 oriented toward an intermediate wall or an end face oriented toward a small wall.

Optionally, one or more electrode assemblies 4 may be disposed.

As shown in FIG. 6 to FIG. 8, in some optional embodiments of this application, the housing 1 includes a first wall 12 and a second wall 13 intersecting each other. An area of the second wall 13 is larger than an area of the first wall 12 and smaller than an area of the end cap 2. The electrode terminal 3 is disposed on the first wall 12. An end face 43, from which the tab 42 extends, of the body portion 41 is oriented toward the second wall 13.

By disposing the electrode terminal 3 on the first wall 12 and setting the area of the second wall 13 to be larger than the area of the first wall 12, the area of the end face from which the tab 42 is led out and the area of an opposite end face thereof are made relatively large, thereby facilitating a liquid (such as an electrolyte solution) to enter the electrode assembly 4, increasing the infiltrated area of the electrode assembly 4 maximally, and improving the infiltration effect.

Taking a prismatic battery as an example, the battery includes two large walls with the largest areas, two intermediate walls with intermediate areas, and two small walls with the smallest areas. One of the first wall 12 or the second wall 13 may be one of the intermediate walls or small walls, and the other of the first wall 12 or the second wall 13 may be the other of the intermediate walls or the small walls.

As shown in FIG. 6 to FIG. 8, in some optional embodiments of this application, the battery cell further includes a connecting component 5. The connecting component is configured to connect the electrode terminal 3 and the tab 42. By disposing the connecting component 5, it is convenient to connect the tab 42 to the electrode terminal 3.

Optionally, the connecting component 5 may be a connecting strip made of a conductive material.

In some optional embodiments of this application, the connecting component 5 includes a first connecting portion 51 and a second connecting portion 52. The first connecting portion 51 is configured to be connected to the electrode terminal 3. The second connecting portion 52 is configured to be connected to the tab 42. By disposing the first connecting portion 51 and the second connecting portion 52, a part connected to the electrode terminal 3 and the tab 42 on the connecting component 5 is made relatively independent, thereby making it convenient to dispose a structure on the connecting component 5 to connect the electrode terminal 3 and the tab 42.

Optionally, the first connecting portion 51 and the second connecting portion 52 may be formed in one piece or discretely disposed. As an example, the first connecting portion 51 may be connected to the second connecting portion 52 by one of a welding structure, a conductive adhesive bonding structure, or a riveting structure. The conductive connection implemented by a welding structure means that the first connecting portion 51 is connected to the second connecting portion 52 by welding such as laser welding. The conductive connection implemented by a conductive adhesive bonding structure means that the first connecting portion 51 is bonded to the second connecting portion 52 by using conductive adhesive. The conductive adhesive may be a conductive adhesive film. The conductive adhesive can not only implement electrical connection between the first connecting portion 51 and the second connecting portion 52, but also implement mechanical connection between the two connecting portions. The conductive connection implemented by a riveting structure means that the first connecting portion 51 is connected to the second connecting portion 52 by a rivet.

Optionally, the tab 42 may be disposed between the second connecting portion 52 and the second wall 13. In this way, the tab 42 can overlay the surface of the second connecting portion 52 after being bent, thereby increasing the contact area between the second connecting portion 52 and the tab 42.

As shown in FIG. 6 to FIG. 8, in some optional embodiments of this application, the connecting component 5 is L-shaped.

By making the connecting component 5 be L-shaped, it is convenient to dispose the connecting component 5 at a corner of junction between the first wall 12 and the second wall 13, thereby fully utilizing the remaining space in the housing 1 and increasing the energy density of the battery cell.

As shown in FIG. 4, in some optional embodiments of this application, along the thickness direction (x-axis direction in the drawing) of the end cap 2, the housing 1 includes two openings 11 arranged opposite to each other. The battery cell includes two end caps 2. The two end caps 2 are disposed at the two openings 11 correspondingly. By creating two openings 11, the operating space available for assembling on the housing 1 is further increased, thereby improving the assembling efficiency.

FIG. 9 is a schematic structural diagram of an electrode assembly 4 according to some embodiments of this application. As shown in FIG. 3 and FIG. 6 to FIG. 9, in some optional embodiments of this application, along a thickness direction (x-axis direction in the drawing) of the second wall 13, a dimension of the body portion 41 of the electrode assembly 4 is H1, and a dimension of the housing 1 is H2, satisfying: H1/H2 ≥ 0.8. By constraining the H1/H2 ratio, the body portion maximally fills the internal space of the battery cell, thereby reducing the space occupied by other components (such as a connecting component) of the battery cell, and improving the space utilization and energy density of the battery cell.

Optionally, a dimension of the body portion 41 of the electrode assembly 4 is H1, and a dimension of the housing 1 is H2, satisfying: H1/H2 ≥ 0.9.

Optionally, the dimension of the body portion 41 of the electrode assembly 4 is H1, and the dimension of the housing 1 is H2, satisfying: H1/H2 is equal to 0.85, 0.9, or 0.95.

As shown in FIG. 3 and FIG. 6 to FIG. 9, in some optional embodiments of this application, the electrode assembly is a jelly-roll electrode assembly. A dimension of the electrode assembly 4 along a first direction (z-axis direction in the drawings) is L, satisfying: 300 mm ≤ L ≤ 800 mm. The first direction is perpendicular to the thickness direction (x-axis direction in the drawings) of the end cap 2 and a thickness direction (y-axis direction in the drawings) of the second wall 13. The production efficiency of the jelly-roll electrode assembly 4 is relatively high. By constraining the dimension of the electrode assembly along the first direction, this application alleviates the problem that L is overly small and results in a relatively low energy density of the battery cell, and the problem that L is overly large and increases the difficulty of processing the electrode assembly and reduces the production efficiency of the electrode assembly.

Optionally, along the first direction, the dimension of the electrode assembly 4 is L, satisfying: 500 mm ≤ L ≤ 550 mm.

Optionally, along the first direction, the dimension of the electrode assembly 4 is L, satisfying that L is equal to 400 mm, 500 mm, 600 mm, or 700 mm.

As shown in FIG. 3 and FIG. 6 to FIG. 9, in some optional embodiments of this application, along the thickness direction (x-axis direction in the drawings) of the end cap 2, the dimension of the electrode assembly 4 is D, satisfying: 10 mm ≤ D ≤ 80 mm. When the number of electrode assembly 4 is one, the dimension of one electrode assembly 4 is D, satisfying: 10 mm ≤ D ≤ 80 mm. When the number of electrode assemblies 4 is plural, the plurality of electrode assemblies are arranged along the thickness direction (x-axis direction in the drawing) of the end cap 2, and D is the total dimension of the plurality of electrode assemblies 4 along the thickness direction (x-axis direction in the drawing) of the end cap 2. By constraining the dimension of the electrode assembly along the thickness direction, this application alleviates the problem that D is overly small and results in a relatively low energy density of the battery cell, and the problem that D is overly large and increases the difficulty of processing the electrode assembly and reduces the production efficiency of the electrode assembly. Optionally, along the thickness direction of the end cap 2, the dimension of the electrode assembly 4 is D, satisfying: 40 mm ≤ D ≤ 50 mm.

Optionally, along the thickness direction of the end cap 2, the dimension of the electrode assembly 4 is D, satisfying that D is equal to 20 mm, 30 mm, 40 mm, 50 mm, 60 mm, or 70 mm.

According to a second aspect of this application, a battery is provided. The battery includes the battery cell.

According to a third aspect of this application, an electrical device is provided. The electrical device includes the battery cell configured to provide electrical energy.

In some optional embodiments of this application, a battery cell is provided. The battery cell includes a housing 1, an end cap 2, and an electrode terminal 3. An opening 11 is created on the housing 1. The end cap 2 is configured to fit and cover the opening 11. The electrode terminal 3 is disposed on the housing 1. The end cap 2 is a largest-area wall of the battery cell. The battery cell further includes an electrode assembly 4. The electrode assembly 4 is disposed in the housing 1. The electrode assembly 4 includes a body portion 41 and a tab 42 extending from the body portion 41. An arrangement direction of the tab 42 and the body portion 41 is perpendicular to a thickness direction of the end cap 2. The housing 1 includes a first wall 12 and a second wall 13 intersecting each other. The electrode terminal 3 is disposed on the first wall 12. An end face 43, from which the tab 42 extends, of the body portion 41 is oriented toward the second wall 13. The battery cell further includes a connecting component 5 configured to connect the electrode terminal 3 and the tab 42. The connecting component 5 is L-shaped. Along the thickness direction of the end cap 2, the housing 1 includes two openings 11 arranged opposite to each other. The battery cell includes two end caps 2. The two end caps 2 are disposed at the two openings 11 correspondingly. Along the thickness direction of the second wall 13, the dimension of the body portion 41 of the electrode assembly 4 is H1, and the dimension of the housing 1 is H2, satisfying: H1/H2 ≥ 0.9. The dimension of the electrode assembly 4 along a first direction is L, satisfying: 490 mm ≤ L ≤ 510 mm, where the first direction is perpendicular to the thickness direction of the end cap 2 and the thickness direction of the second wall 13. Along the thickness direction of the end cap 2, the dimension of the electrode assembly 4 is D, satisfying: 45 mm ≤ D ≤ 55 mm.

In contrast to the related art, in the battery cell, battery, and electrical device disclosed in some embodiments of this application, by making the end cap 2 be the largest-area wall of the battery cell, this application increases the area of the opening 11, facilitates a structure in the battery cell to enter the housing 1, increases the assembling speed during assembling, and in turn, improves production efficiency of the battery cell.

Finally, it is hereby noted that the foregoing embodiments are merely intended to describe the technical solutions of this application but not to limit this application. Although this application has been described in detail with reference to the foregoing embodiments, a person of ordinary skill in the art understands that modifications may still be made to the technical solutions described in the foregoing embodiments, or equivalent replacements may still be made to some or all technical features in the technical solutions. Such modifications and equivalent replacements fall within the scope of the claims and specification hereof without making the essence of the corresponding technical solutions depart from the scope of the technical solutions of the embodiments of this application. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A battery cell, comprising:
a housing, on which an opening is created;
an end cap, configured to fit and cover the opening; and
an electrode terminal, disposed on the housing; wherein
the end cap is a largest-area wall of the battery cell.

2. The battery cell according to claim 1, wherein
the battery cell further comprises an electrode assembly, and the electrode assembly is disposed in the housing; and
the electrode assembly comprises a body portion and a tab extending from the body portion, and an arrangement direction of the tab and the body portion is perpendicular to a thickness direction of the end cap.

3. The battery cell according to claim 2, wherein
the housing comprises a first wall and a second wall intersecting each other, an area of the second wall is larger than an area of the first wall and smaller than an area of the end cap, the electrode terminal is disposed on the first wall, an end face, from which the tab extends, of the body portion is oriented toward the second wall.

4. The battery cell according to claim 3, wherein
the battery cell further comprises a connecting component, and the connecting component is configured to connect the electrode terminal and the tab.

5. The battery cell according to claim 4, wherein
the connecting component comprises a first connecting portion and a second connecting portion, the first connecting portion is configured to be connected to the electrode terminal, and the second connecting portion is configured to be connected to the tab.

6. The battery cell according to claim 5, wherein
the connecting component is L-shaped.

7. The battery cell according to any one of claims 3 to 6, wherein
along the thickness direction of the end cap, the housing comprises two openings arranged opposite to each other, the battery cell comprises two end caps, and the two end caps are disposed at the two openings correspondingly.

8. The battery cell according to any one of claims 3 to 7, wherein
along a thickness direction of the second wall, a dimension of the body portion of the electrode assembly is H1, and a dimension of the housing is H2, satisfying: H1/H2 ≥ 0.8.

9. The battery cell according to any one of claims 3 to 7, wherein
the electrode assembly is a jelly-roll electrode assembly, and a dimension of the electrode assembly along a first direction is L, satisfying: 300 mm ≤ L ≤ 800 mm, wherein the first direction is perpendicular to the thickness direction of the end cap and a thickness direction of the second wall.

10. The battery cell according to any one of claims 2 to 7, wherein
along the thickness direction of the end cap, a dimension of the electrode assembly is D, satisfying: 10 mm ≤ D ≤ 80 mm.

11. A battery, comprising the battery cell according to any one of claims 1 to 10.

12. An electrical device, comprising the battery cell according to any one of claims 1 to 10, wherein the battery cell is configured to provide electrical energy.
